# EUROPEAN PATENT APPLICATION

(11) **EP 4 786 344 A1**
(43) Date of publication of application: **05.08.2026**
(21) Application number: 25155887.0
(22) Date of filing: 04.02.2025
(51) Int. Cl.: B65B 1/00

(54) **STORAGE BIN WITH AN INSERT HAVING A BASE WITH APERTURES FOR UNLOADING MEANS**

(71) Applicant: AutoStore Technology AS, 5578 Nedre Vats (NO)
(72) Inventor: AUSTRHEIM, Trond, 5578 Nedre Vats (NO); AARSETH, Simen, 5578 Nedre Vats (NO); STUHAUG, Ragnar, 5578 Nedre Vats (NO)
(74) Representative: Kilburn & Strode LLP

(57) **Abstract**

The disclosure relates to an insert (500) configured to be removably inserted into a bin (112) for an automated storage and retrieval system. The insert (500) comprises a base (510) having a supporting surface for supporting a storage item to be stored in the bin (112), wherein the base (510) defines at least one aperture (512) in the supporting surface for receiving, through the at least one aperture (512), an actuator for moving a storage item into or out of the insert (500) in a first direction parallel to the supporting surface. The insert (500) comprises at least one attachment portion (520) for releasably attaching to a suspending device, wherein the insert (500) is configured to be suspended from the at least one attachment portion (520). The disclosure also relates to a corresponding bin (112) with the insert (500), an item handling device for moving a storage item into or out of an insert (500), a method for moving a storage item into or out of the insert (500).

## Description

### TECHNICAL FIELD

The disclosure relates to an insert for a bin in an automated storage and retrieval system. More particularly, it relates to an insert configured to be removably inserted into a bin for an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a bin and an insert configured to be removably inserted into the bin;
Fig. 6 shows an item handling device;
Fig. 7 shows an actuator for the item handling device;
Fig. 8 shows a method of item handling;
Fig. 9A to Fig. 9G show a sequence of the item handling device handling items.

### DETAILED DESCRIPTION

In overview, the present disclosure relates to an insert for being removably inserted into a bin of an automated storage and retrieval system, and an item handling device for cooperating with the insert to remove items from bins or put items into bins for storage. The insert has one or more apertures in the base of the insert which allow an actuator to reach through the apertures and move items into or out of the insert. The cooperation between the one or more apertures and actuator(s) provides an automated and reliable arrangement for loading and unloading items into/out of the inserts and bins. For example, the actuator(s) being positioned through the apertures means that the mechanism driving the item into or out of the insert is positioned in the insert itself and therefore is less susceptible to misalignment. The actuator(s) moving the items from underneath also means that the actuator(s) can move the item in either direction immediately and/or change direction easily. For comparison, an actuator entering into the insert from either side of the insert rather than through apertures in the base must reach over the item in order to pull the item towards the actuator, or can only push in a direction away from the actuator. Either way, a side-entry actuator requires additional stages and complication to effectively handle the item being moved. An arrangement having an actuator that enters the insert through apertures in the base increases throughput, because such an arrangement does not require an additional action of the actuator to return to its starting position after moving an item. Instead, the actuator is engaged as soon as the insert is positioned on the actuator.

This overview is provided to introduce, in simplified form, a selection of concepts that are further described herein. The presence of a feature in this overview does not imply that the feature is essential to the disclosure.

### Automated storage and retrieval system

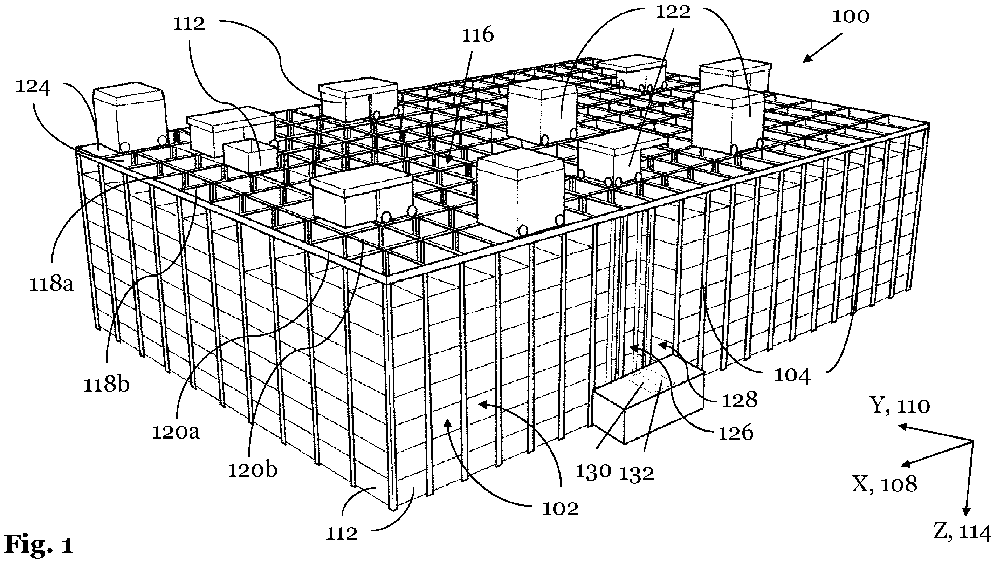

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering (`pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

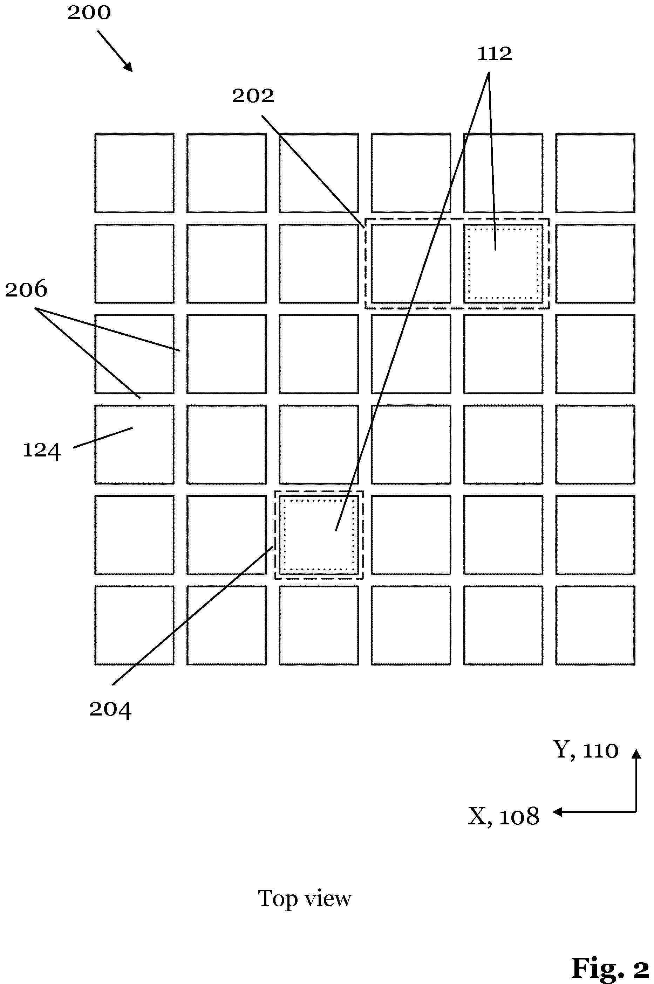

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

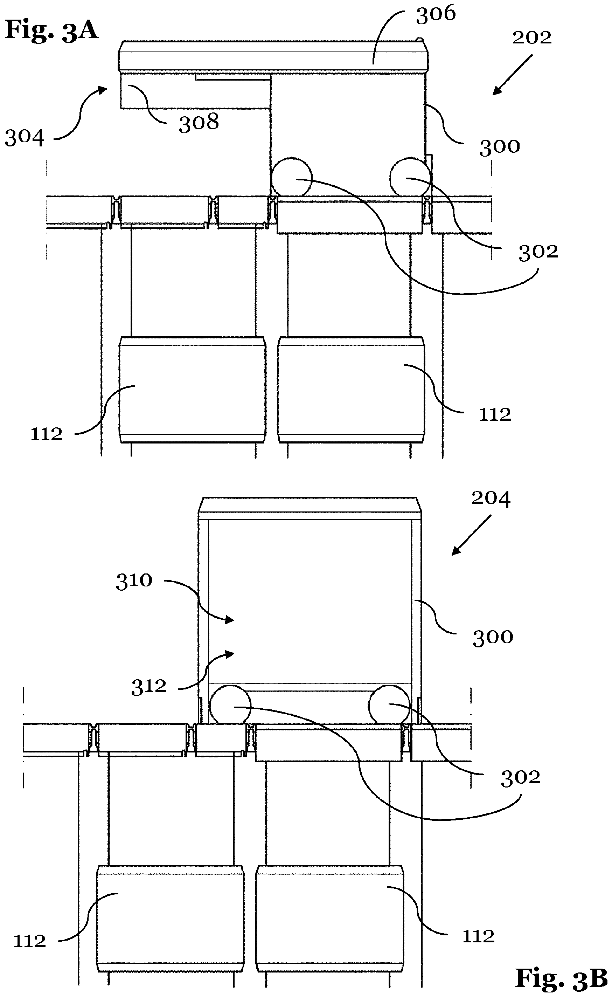

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

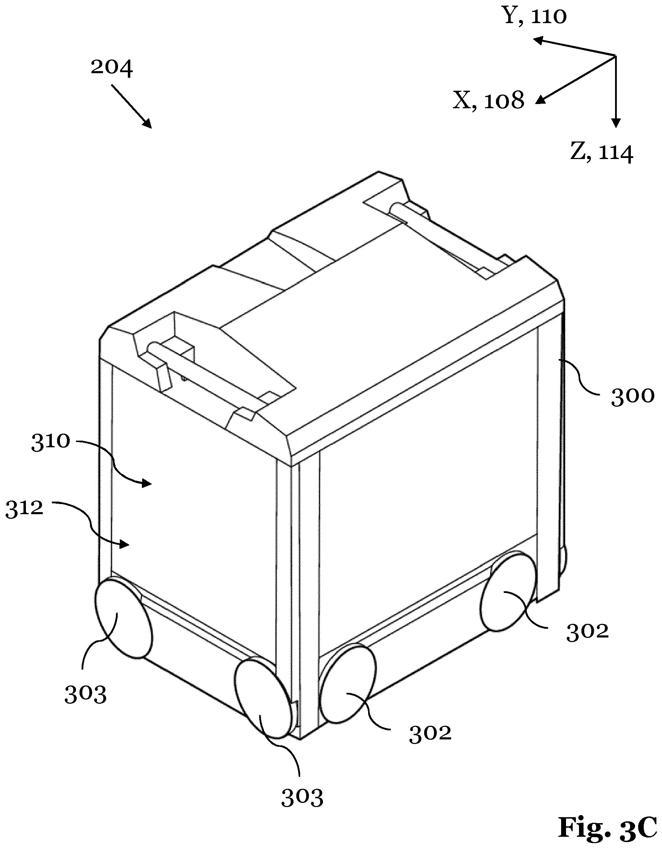

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

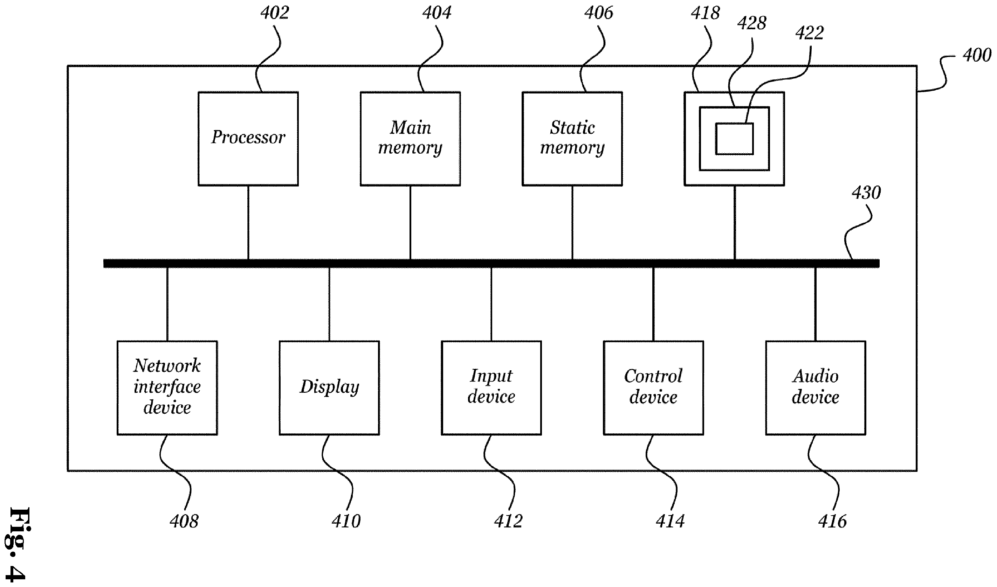

Control and monitoring of the automated storage and retrieval system, including monitoring and storing bin position and controlling bin provision, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 maybe a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for provision to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

Implementations of the present disclosure are described in the below by way of example with reference to the drawings.

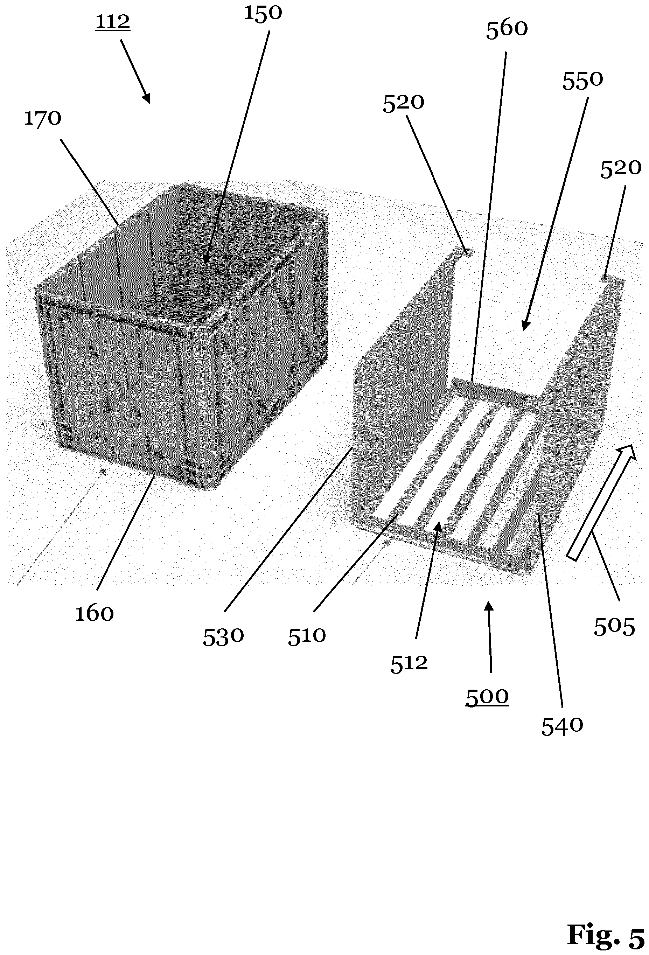

With reference to Fig. 5, a bin 112 comprises a bin base 160 and a bin wall 170 extending perpendicularly from the base 160 around the perimeter of the bin base 160. The bin base 160 and bin wall 170 define, and partially enclose, a bin storage volume 150. The bin storage volume can receive items for storing in the automated storage and retrieval system, as described above with reference to Fig. 1 to Fig. 4. The bin storage volume can receive an insert 500 in which the storage item(s) is stored.

The insert 500 for the bin 112 comprises a base 510, a first wall 530 and a second wall 540, with the first and second walls arranged on either side of the base 510, thereby defining a storage volume 550. The surface of the base 510 disposed towards the storage volume 550 is referred to herein as a supporting surface, as this surface supports items in the storage volume while the insert is suspended. The insert comprises a flange 560 along each side of the base that does not have the first or second wall extending therefrom. The flange provides stiffening against bending of the base when items are positioned on the supporting surface.

The edges of the base 510, the first side wall 530, and the second side wall 540 at least partially define a first opening that provides access to the storage volume 550 from a first direction 505 parallel to the base 510. Likewise, the opposite edges of the base 510, the first side wall 530, and the second side wall 540 at least partially define a second opening that provides access to the storage volume 550 from a direction opposite (also referred to as 'anti-parallel') to the first direction 505.

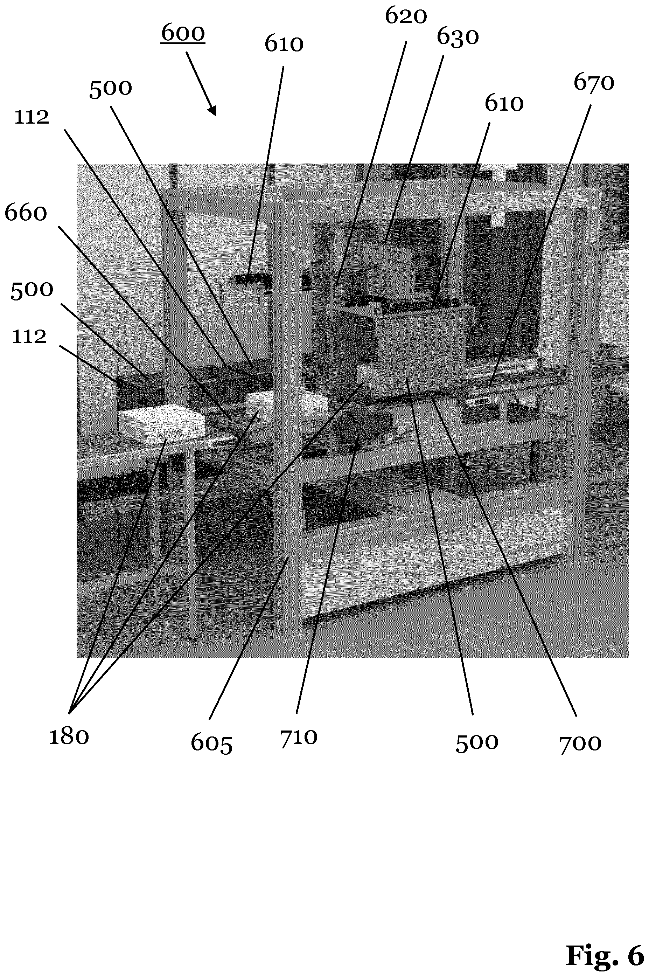

The base 510 defines six apertures 512 for receiving an actuator therethrough, such as an actuator of the item handling device as described below with reference to Fig. 6, Fig. 7, and Fig. 9A-9G. The apertures 512 are such that the actuator, when received by the apertures 512, can move a storage item into or out of the insert 500 in the first direction 505 parallel to the supporting surface of the base 512 (or in the direction opposite the first direction). The apertures 512 have a shape of elongate slots, i.e., each having a length greater than its width. Each pair of adjacent apertures 512 is separated by a portion of the supporting surface for supporting an item. The apertures 512 form an array of parallel apertures 512 that substantially covers the area of the base 512. The length of each the apertures 512 is arranged parallel to the first wall 530 and the second wall 540, i.e., parallel to the first direction 505. The apertures 512 are spaced apart evenly between the first wall 530 and the second wall 540.

The insert 500 comprises an attachment portion 520, in the form of an attachment portion at a top of each of the first wall 530 and the second wall 540. The attachment portion comprises an overhang that extends partly above the storage volume 550 for being supported by a suspending device, e.g., as described below with reference to Fig. 6, Fig. 7, and Fig. 9A-9G.

The insert 500 has dimensions such that the insert can fit entirely within the bin storage volume 150 of the bin 112. In other words, when the insert 500 is positioned in the bin, the insert 500 does not protrude from the outer dimensions of the bin 112. Therefore the insert 500 does not change the dimensions of the bin 112 and the bin can be stacked or handled in the same manner as any other bin which does not have the insert therein. The insert 500 does not obscure or interfere with the portions of the bin 112 that are configured to be lifted by a bin handling robot, as described above with reference to Fig. 1 to Fig. 3C.

With reference to Fig. 6, an item handling device 600 configured to move storage items 180 into or out of the insert 500. The item handling device 600 comprises a frame 605 on which the components of the item handling device are supported and held in relative positions. The item handling device 600 comprises two suspending devices 610, supported by respective cantilever arms 630 extending from a rotatable column 620. The cantilever arms 630 are arranged on opposite sides of the rotatable column 620, such that a 180-degree rotation of the rotatable column 620 will invert the positions of the suspending devices 610. The rotatable column 620 comprises a column driver to rotate the rotatable column 620, e.g., a drive shaft driven by a motor. The cantilever arms 630 comprise a lifting mechanism to raise and lower the suspending devices 610. The lifting mechanism moves the cantilever arms 630 up and down the rotatable column 620. For example, the lifting mechanism may use a rack and pinion arrangement, wires, pulleys, pneumatics, etc. or any other suitable means for moving the cantilever arm 630 up and down the rotating column. Each cantilever arm 630 can move up and down independently of each other cantilever arm.

The suspending devices 610 each comprise a gripper plate having one or more grippers that engage the corresponding attachment portions of the insert 500. For example, the gripper comprises a moveable projection that, when lowered onto the top of the insert 500, moves to a position under the overhang of the attachment portion. When the suspending device 610 is raised, the moveable projection supports the attachment portion 520 and the insert 500 is suspended from the suspending device. When the suspending device 610 is lowered again and the moveable projection moves out from under the overhang or otherwise disengages the attachment portion 520 and the suspending device 610 can be lifted again leaving the insert 500 in place.

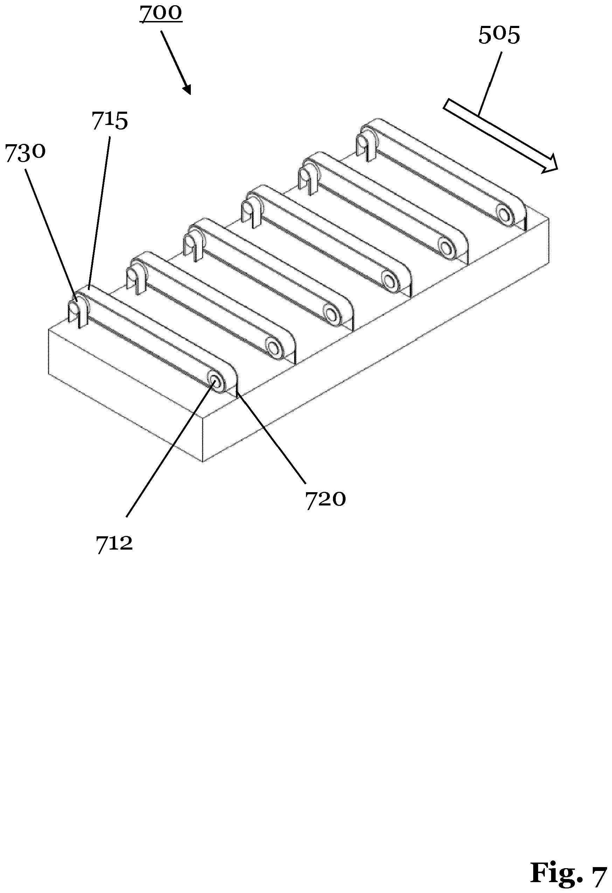

The item handling device comprises an actuator 700, which is described below in more detail with reference to Fig. 7. The actuator 700 comprises six conveyors having a length and spacing corresponding to the apertures 512 of the insert. Accordingly, when the insert 500 is lowered onto the actuator 700, the conveyors of the actuator 700 extend through the apertures 512 to provide a conveying plane above the supporting surface. The actuator 700 is driven by a motor 710 via a driving mechanism. The actuator 700 can be driven in either direction to move a storage item 180 out of the insert 500 or to move a storage item 180 into the insert. Fig. 6 shows the insert 500 suspended by the suspending device 610 over the actuator 700 with the conveyors of the actuator 700 not positioned through the apertures 512 of the insert 500 (also referred to herein as the second configuration).

The item handling device comprises an input item conveyor 660 configured to move incoming storage items (that is, items to be stored in the insert 500 in a bin 112) into the insert 500, when the insert 500 is positioned on the actuator 700 such that the actuator is positioned through the apertures 512 (also referred to herein as the first configuration). The input item conveyor 660 can advance an incoming storage item at least as far as the position where the conveyors of the actuator 700 will engage the incoming storage item to continue the movement into the insert 500.

The item handling device comprises an output item conveyor 670 configured to move outgoing storage items (that is, items being retrieved from storage) from the insert 500, when the insert 500 is positioned on the actuator 700 such that the actuator is positioned through the apertures 512. The output item conveyor 670 can receive an outgoing storage item at least from the position where the conveyors of the actuator 700 cease to engage the outgoing storage item, such that the output item conveyor 670 continues the movement of the item out of the insert 500.

Further conveyors are used to move the incoming or outgoing storage items to/from the input/output item conveyors to integrate the item handling system with the rest of the automated storage and retrieval system.

On a side of the rotatable column 620 opposite the actuator 700, the item handling device comprises a bin bay, which is a position from which an insert 500 can be removed from a bin 112 by a corresponding suspending device 610. The suspending devices 610 of the system have the same features for engaging and lifting an insert 500. A bin conveyor is configured to move bins 112 to and from the bin bay. The bin conveyor moves bins, with the inserts and storage items therein, to and from locations where the bins can be put into or take out of the grid 100, e.g., via a bin lift and bin handling robots.

The combination of components that control the position of the insert(s) 500 in relation to the actuator 700 is also referred to herein as a positioning mechanism. For example, with reference to Fig. 6, the cantilever arm 630 is a positioning mechanism because, as it is raised and lowered on the rotatable column 620, the actuator 700 and suspending device 610 are transitioned between the first configuration with the actuator 700 in the apertures 512 and the second configuration. The combination of cantilever arm 630 and the rotatable column 620 can also be considered a positioning mechanism as this combination is configured to transition two inserts 500 between the first and second configuration (one at a time).

The control any and/or all of the moveable or actuatable components of the item handling device is automated. In particular, the control may be performed by a control and monitoring system as defined above with reference to Fig. 4. The movement and/or actuation of components may be performed by one or more motor or combination of motors and drive mechanism according to any suitable arrangement. The item handling device may comprise pre-programed actuation/movement distances or number of revolutions corresponding to each action performed by the item handling device, e.g.: a height to raise or lower the suspending device to either pick up/drop off the insert 500 from a bin or to transition the insert 500 between the first and second configuration; a distance to advance each conveyor to move a storage item to the desired location, or a corresponding number of revolutions of a conveyor roller; a rotation degree to rotate the rotatable column 620 to invert positions of inserts 500; etc. Alternatively or additionally, the item handling device may comprise one or more sensors to determine the position of one or more storage item or insert within the item handling device and thereby provide feedback for control of the moveable or actuatable components to ensure proper function.

The power for moving/actuating any and/or all of the moveable or actuatable components of the item handling device is provided by one or more power supply. The power supply may comprise a local power supply, such as a one or more battery, and/or a mains power supply.

With reference to Fig. 7, the actuator 700 comprises six conveyors arranged for being positioned in the apertures 512 of the insert 500. Fig. 7 is a schematic representation and is not to scale with the actuator 700 as shown in Fig. 6.

Each conveyor of the actuator 700 has a conveyor belt 715 for supporting and moving a storage item when the actuator 700 is positioned through the apertures 512 in the first configuration. The conveyor belt 715 is looped around a roller 712 at each end of a conveyor length. The rollers 712 are supported by a mount 720 which holds the conveyor in position with respect to the rest of the item handling device (e.g., attached directly or indirectly to the frame 605). Each conveyor has a drive belt 730 coupled to at least one of the rollers 712 to turn the rollers 712 and thereby to advance the conveyor belt 715 around the loop. The drive belt 720 is driven directly or indirectly by the motor 710. The drive belt 720 can drive the rollers 712 in either direction to advance the conveyor belt 715 in either the first direction 505 or the direction opposite to the first direction. The height of the conveyors is greater than the height of the flange 560 of the insert so that the storage item 180 can pass over the top of the flange 560 to exit the insert 500.

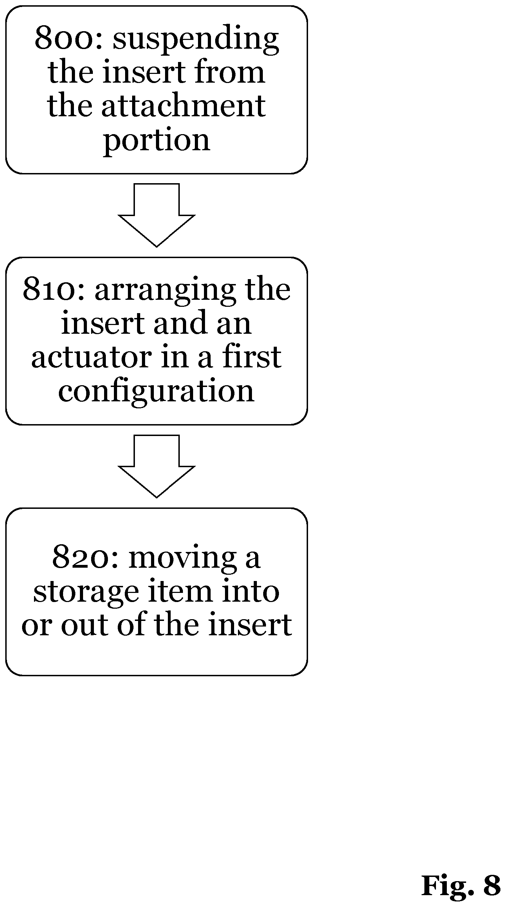

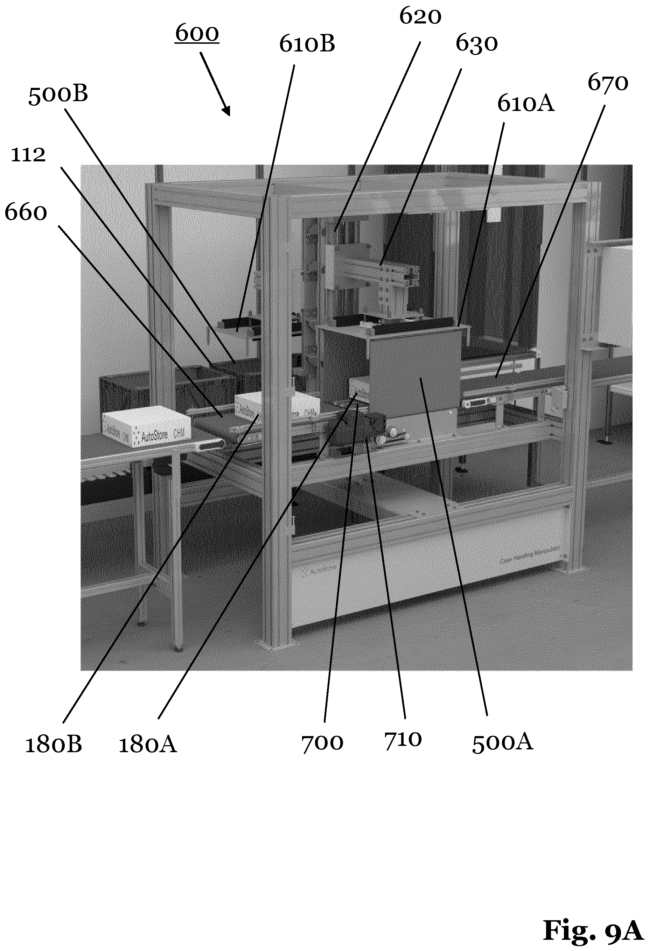

With reference to Fig. 8, a method for moving a storage item into or out of the insert 500 comprises suspending 800 the insert from the attachment portion, arranging 810 the insert and an actuator in a first configuration, and moving 820 a storage item into or out of the insert 500. The first configuration has the actuator 700 positioned through the aperture 512 of the insert 500, such as shown in Fig. 9A.

The suspending 800 comprises attaching the suspending device 610 to the attachment portion(s) 520 of the insert 500 to carry the weight of the insert 500 and the storage item 180 in the storage volume 550. For example, the suspending may include lifting a gripper plate while the gripper plate is attached to the attachment portion(s) 520. The suspending may continue through the arranging 810 and moving 820 or may pause if the insert 500 is set down onto a rest such that the weight of insert 500 is no longer supported by the suspending device.

The arranging 810 comprises moving the cantilever arm 630, which supports the suspending device 610, and therefore also the insert 500, down the rotating column 620 until the actuator 700 is positioned in the apertures 512 of the insert 500, referred to as the first configuration.

The moving 820 the storage item 180 comprises operating the conveyors of the actuator 700 while the actuator 700 and insert 500 are in the first configuration. The conveyors move the storage item 180 out of the insert 500 onto the output item conveyor 670 or receive the storage item 180 into the insert 500 from the input item conveyor 660.

With reference to Fig. 9A to Fig. 9G, a sequence of handling items using the item handling device 600 will now be described.

With reference to Fig. 9A, the conveyors of the actuator 700 are positioned in the apertures 512 of a first insert 500A. This is referred to herein as the first configuration. A first storage item 180A is supported by the conveyors of the actuator 700, but still within the first insert 500A. The first configuration can be reached from the arrangement shown in Figure 6 by lowering the cantilever arm 630 that holds a first suspending device 610A. The first storage item 180A, which is also referred to herein as an outgoing storage item 180A, is ready for removal from the first insert 500A onto the output item conveyor 670. An incoming storage item 180B is positioned on the input item conveyor 660 ready to be moved into the first insert 500A. A second suspending device 610B has started to be lowered by its corresponding cantilever arm down to a second insert 500B positioned in a bin 112.

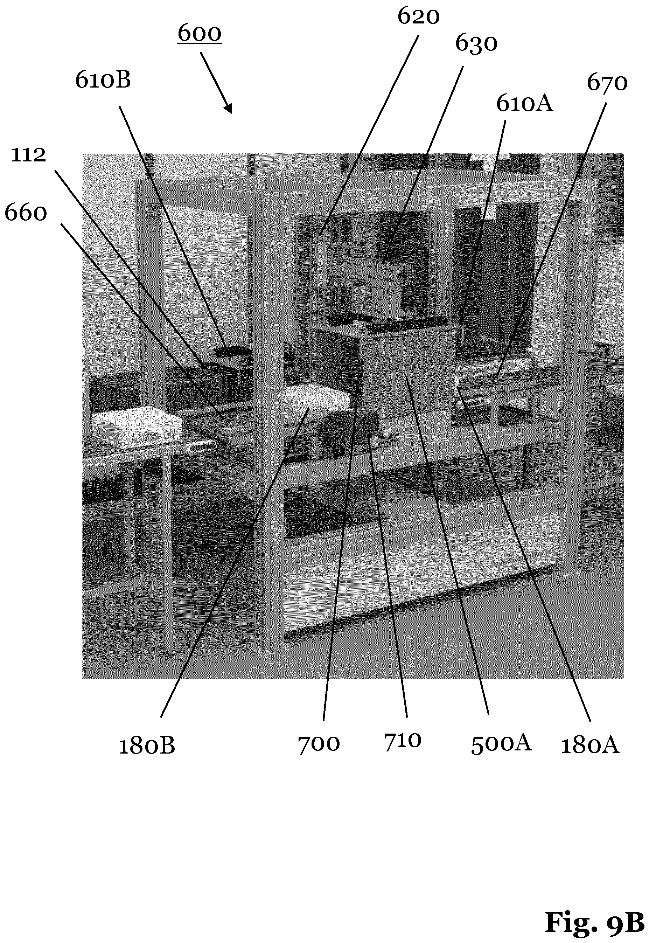

With reference to Fig. 9B, the conveyors of the actuator 700 have been activated so that the motor 710 drives the conveyor belts 715 to move the first storage item 180A out of the first insert 500A in the first direction 505, to be received by the output item conveyor 670. Concurrently, the input item conveyor 660 is activated to move the incoming storage item 180B towards the conveyors of the actuator 700 for moving into the first insert 500A. At this stage, the first suspending device 610A maintains the elevation of the first insert 500A. On the opposite side of the rotatable column 620, the second suspending device 610B has completed its movement down onto the second insert 500B in the bin 112. The second suspending device 610B then attached to the attachment portion(s) of the second insert 500B ready to lift the second insert 500B.

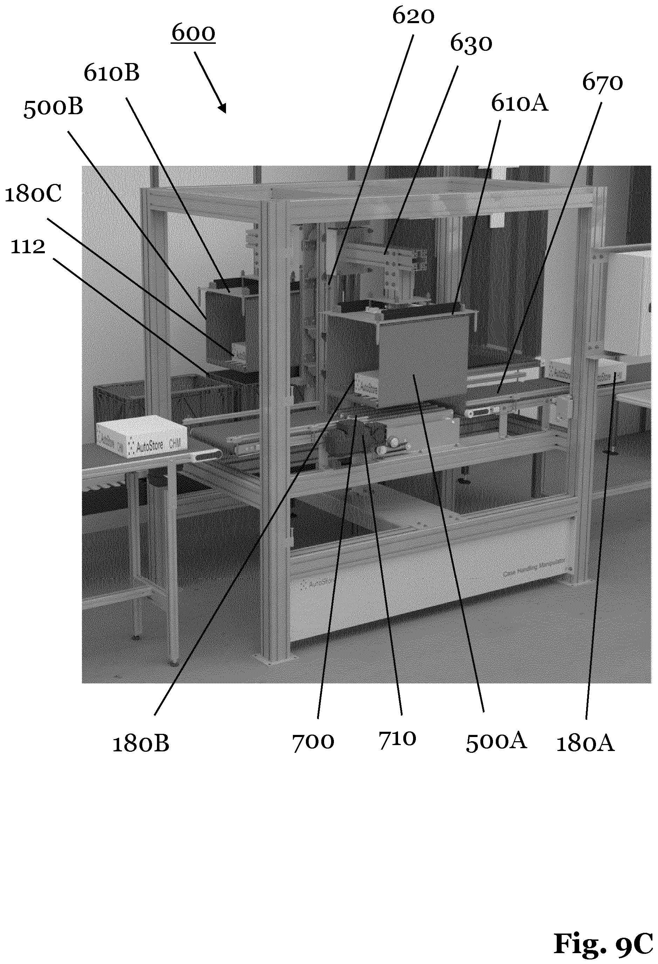

With reference to Fig. 9C, the first storage item 180A has advanced on the output item conveyor 670 for further processing elsewhere. The movement of the incoming storage item 180B into the insert has been completed and the conveyors of the actuator 700 deactivated. The first suspending device 610A has also lifted the first insert 500A off the actuator 700 into the second configuration wherein the conveyors are not positioned in the apertures 512. The second suspending device 610B has lifted the second insert 500B out of the bin 112. The lifting of the first and second suspending devices is performed by raising the cantilever arms 630 up the rotatable storage column 620. Inside the second insert 500B, a second storage item 180C rests on the supporting surface of the base of the second insert 500B. The item handling device 600 is now ready to swap the first and second inserts over so that the incoming storage item 180B (which could alternatively be relabelled as a first storage item for the purposes of the subsequent actions) is stored into the bin 112 and the second storage item 180C is removed from the second insert 500B for further processing.

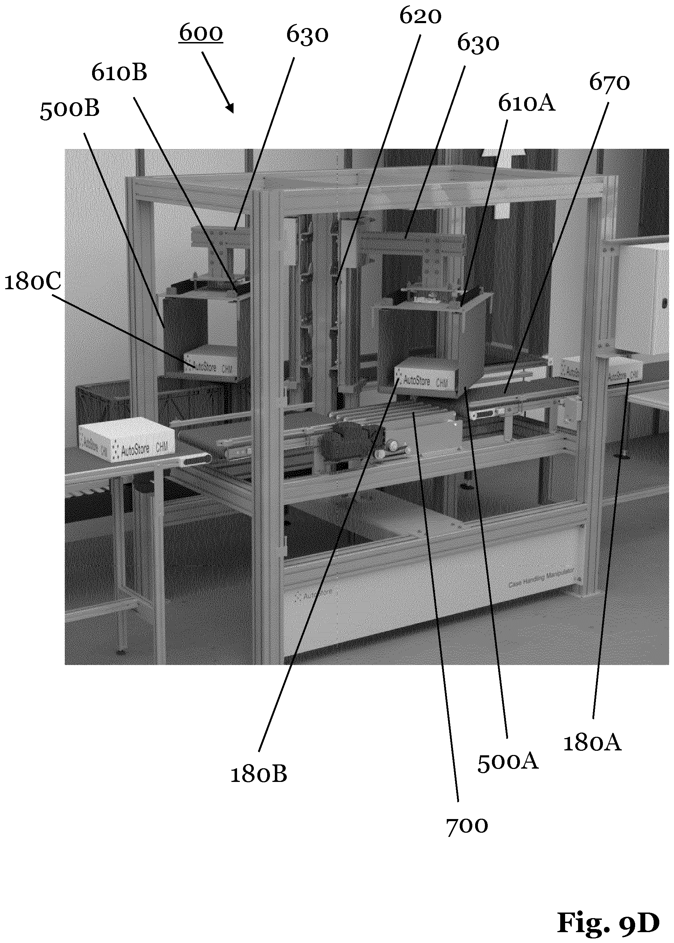

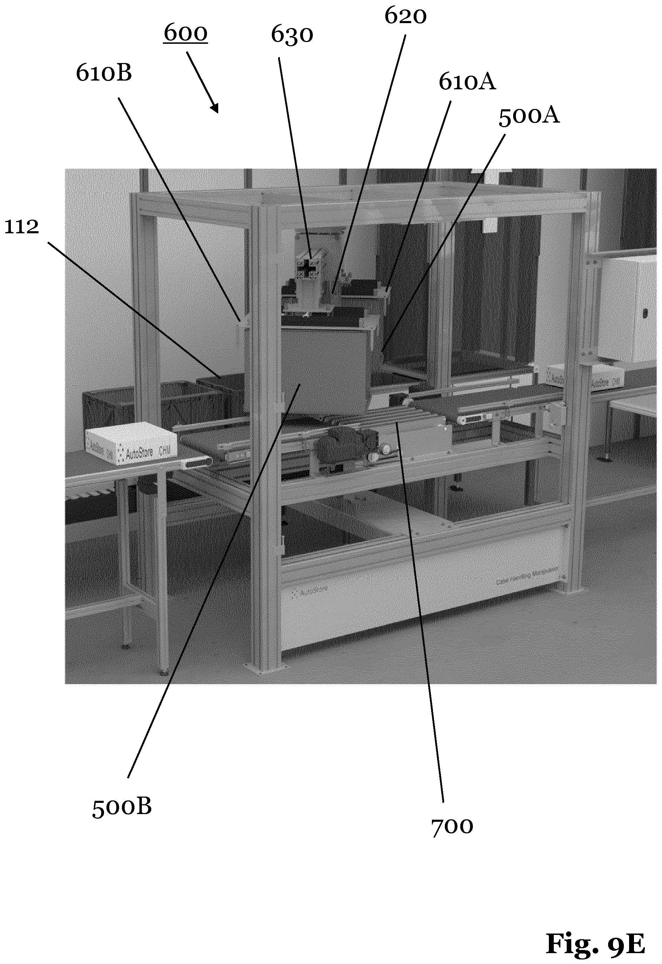

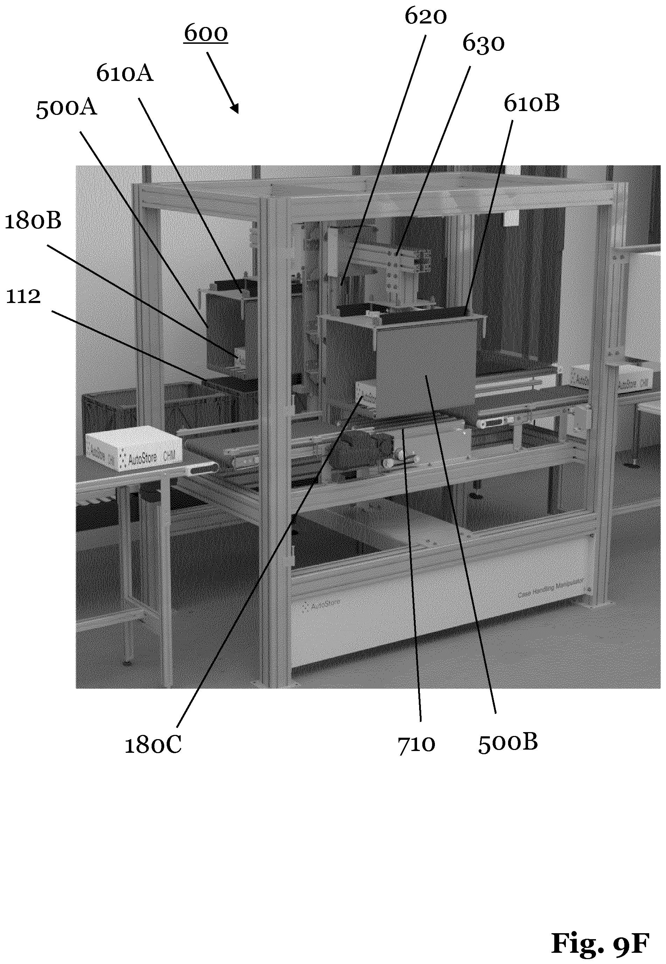

With reference to Fig. 9D, Fig. 9E, and Fig. 9F, while the first and second suspending devices 610A, 610B suspend the first and second inserts 500A, 500B, the rotatable column 620 rotates about its rotation axis by 180 degrees. The end state of the rotation is shown in Fig. 9F, wherein the second insert 500B and second storage item 180C therein are above the actuator 700 and the first insert 500A and incoming storage item 180B therein are above the bin 112. At this stage, both of the first and second inserts 500A, 500B may be considered to be in the second configuration, because the actuator is not positioned in the apertures 512 of either insert.

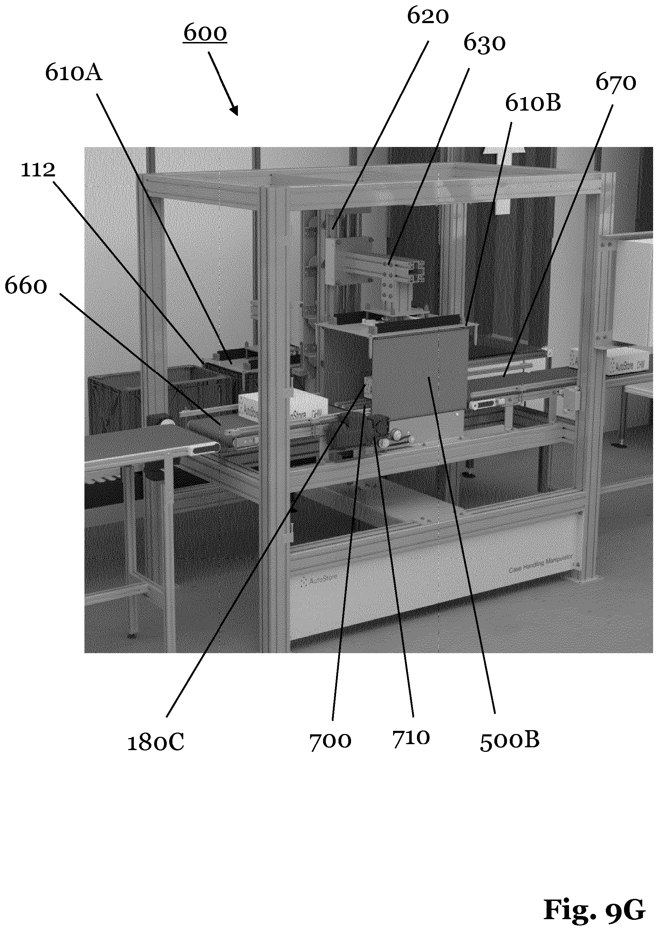

With reference to Fig. 9G, the second suspending device 610B has lowered the second insert 500B onto the actuator, i.e., into the first configuration, and the conveyors of the actuator 700 have begun to move the second storage item 180C out of the second insert 500B to the output item conveyor 670. A next storage item can also be moved into the second insert 500B for storing in a next bin that moves into the bin bay. The first suspending device 610A has been lowered onto the bin 112 such that the first insert 500A is positioned in the bin 112, referred to herein as the third configuration. The first suspending device 610A then detaches from the attachment portions of the first insert 500A and the bin conveyor advances the bin 112 to be stored in the grid. The first suspending device 610A may be raised to allow for a next bin to be moved into the bin bay to repeat the process of removing a next insert and next storage item from the next bin.

Following Fig, 9G, the sequence can proceed in a similar manner as described above with reference to Fig. 9A to Fig. 9G completing the same processes, without necessarily adhering to the particular order of processes described above, or performing the processes in reverse.

Following Fig. 9G, the process can proceed to load and unload inserts from bins and load and unload storage items from inserts on the opposite side, with a 180-degree rotation of the inserts in the middle of the process. Accordingly, the item handling device can process two inserts concurrently to achieve high throughput. The item handling device can process both loading and unloading of storage items into a single insert concurrently, which increases throughput.

Although particular implementations of the disclosure have been described above with reference to the Fig. 5 to Fig. 9G, alternative implementations are also possible, some examples of which are explained below.

In some implementations, the attachment portion of an insert comprise gaps in an upper portion of the first and second walls of the insert, and the suspending device comprises one or more hooks configured to pass through the gaps and engage an underside of the attachment portion. In some implementations, the suspending device comprises any other suitable mechanical or electromagnetic mechanism for releasably attaching to the insert.

In some implementations, the insert is formed from a metal material, e.g., a folded and/or stamped metal sheet. Alternatively or additionally, the insert may be formed from a moulded plastic material or a composite material.

In some implementations, an actuator other than conveyor belts is used to move the storage item in or out of the insert. For example, the actuator may comprise one or more rollers or pushers that extend through the apertures of the insert when in the first configuration.

In some implementations, the actuator comprises only one conveyor positioned along a midline between the first wall and the second wall of the insert. Alternatively, the actuator comprises two or three conveyors spaced apart to support and move a storage item when in the first configuration. In some implementations, the array of conveyors includes multiple conveyors arranged colinearly in the first direction.

In some implementations, the shape of the apertures are not elongate slots but square or round or rounded. The number and shape of the apertures correspond to the actuator such that the actuator can be positioned through the apertures.

In some implementations, an alternative drive mechanism for the conveyors involves any suitable combination of linear or rotation actuators and/or gears, levers, pulleys, etc. rather than using a drive belt.

In some implementations, an alternative positioning mechanism is used, such as using an actuator lift below the insert to raise or lower the actuator rather than raising or lowering the insert.

In some implementations, the rotatable column has three or more cantilever arms, and/or two or more actuators and/or two or more bin bays, for increasing the throughput of the item handling device. Instead of a rotatable column and cantilever arms, the item handling device comprise any suitable mechanism for moving inserts between a first location where the positioning mechanism puts the insert and the actuator into the first configuration and a second location where the insert can be put into the bin in the third configuration. In some implementations, rather than lowering the insert into the bin using a suspending device, the suspending device suspends the insert while a bin is raised until the insert is in the bin in the third configuration.

In some implementations, a different positioning or orientation of input item conveyor, output item conveyor and/or bin conveyor is used according to the required pathway of bins and items in a particular implementation, such that the item handling is suitably integrated with the rest of the automated storage and retrieval system.

Implementations of the disclosure have been described in the above by way of example with reference to the drawings. The present disclosure will now be described in general terms below. The word "may" is used to refer to a feature that is optional, i.e., in some implementations of the disclosure, the feature is present, and in some implementations of the disclosure, the feature is not present. Each possible combination of any features described below with any features described above also forms part of the disclosure.

The present disclosure provides an insert configured to be removably inserted into a bin for an automated storage and retrieval system. The insert comprises a base having a supporting surface. The supporting surface is for supporting a storage item to be stored in the bin. The base defines at least one aperture in the supporting surface. The at least one aperture is for receiving, through the at least one aperture, an actuator for moving a storage item into or out of the insert in a first direction parallel to the supporting surface. The insert comprises at least one attachment portion. The attachment portion is for releasably attaching to a suspending device. The insert is configured to be suspended from the at least one attachment portion.

The insert may comprise a formed metal sheet. The insert may comprise a formed plastic material. The insert may be configured to fit snugly into the bin, which provides greater storage volume. The base may have an external length and width equal / substantially equal to the corresponding internal length and width of a storage volume of the bin. The difference between an external length and width and the corresponding internal length and width of a storage volume of the bin may be less than: 3 cm; 2 cm; 1 cm; 5 mm 2 mm; or 1 mm. The supporting surface may be flat.

The at least one attachment portion may comprise one or more of a recess, a hole, and/or a projection configured to cooperate with the suspending device. The at least one attachment portion may be connected to the base at a distance from the base equal / substantially equal to the height of the storage volume of the bin. The attachment portion being positioned at the top of the bin facilitates reliable attachment to the suspending device, for example, not being obscured by items.

The insert may comprise a first wall extending perpendicularly from a first side of the base and a second wall extending perpendicularly from a second side of the base. The second side may be opposite the first side across the supporting surface such that a storage volume is defined by the base, the first wall, and the second wall. In other words, the first side may be a first side of a first face of the base and the second side may be a second side of the first face of the base. The first wall and the second wall may be connected to the base via bends in the material of the insert.

The storage volume may be accessible to a storage item in the first direction through at least one opening between the first wall and the second wall. The storage volume may be accessible in the first direction through a first opening between the first wall and the second wall. The storage volume may be accessible in the direction opposite to the first direction, through a second opening between the first wall and the second wall. In other words, the first opening and the second opening are adjacent respective sides of the base that are opposite (in particular, the first opening is adjacent a third side of the first face of the base and the second opening is adjacent a fourth side of the first face of the base, wherein the third side and fourth side are opposite each other across the supporting surface). Because the insert is accessible from two directions, loading and unloading of the insert is possible concurrently, increasing throughput. The insert may comprise a flange extending perpendicularly to the base along the third and/or fourth side of the base, or any side of the base below an opening, the flange being for stiffening the base. The flange does not obscure the corresponding opening, e.g., having a flange height: less than half of a wall height of the first and second walls, less than a third of the wall height, less than a fifth of the wall height, or less than a tenth of the wall height.

The at least one attachment may comprise a first attachment portion located at an end of the first wall away from the first side of the base. The at least one attachment portion may comprise a second attachment portion located at an end of the second wall away from the second side of the base.

The base may define a plurality of apertures including the at least one aperture. The base may define at least two apertures. The base may define: three apertures, four apertures, five apertures, six apertures, seven apertures, or eight apertures. Using two or more apertures for actuators increases the stability of moving items into or out of the insert.

Each of the at least one aperture and/or apertures of the plurality of apertures may have a length in the first direction and a width in a second direction perpendicular to the first direction, wherein the length is greater than the width. The at least one aperture/apertures may be elongate. At least one of the apertures may be a slot. Each of the at least one aperture or apertures may be a slot. The at least one aperture/apertures may be rectangular. The at least one aperture/apertures may be parallel to each other. The at least one aperture/apertures may form an array of transversely separated parallel apertures. Apertures having the shapes as described above are especially effective for use with conveyors inserted through the apertures.

Each of the at least one aperture and/or apertures of the plurality of apertures may be configured to receive a respective actuator through the aperture. In other words, each aperture corresponds to a respective actuator of an item handling device.

The insert may comprise a cover arranged opposite the base across the storage volume and defining a side of the storage volume. The cover may span a gap between the first wall and the second wall. The cover provides rigidity to the insert. The cover provides additional locations for the attachment portion to be located.

The present disclosure provides a bin for an automated storage and retrieval system, the comprising: a bin base; a bin wall extending perpendicular to bin base around a perimeter of the bin base; and an insert according to of any of features described above.

The insert is positioned on the bin base and surrounded by the bin wall. The insert may be configured to be removably inserted into a bin storage volume defined by the bin base and the bin wall. The insert may be positioned in the bin storage volume of the bin. The insert, when in the bin, may be entirely within the bin storage volume. In other words, the insert does not project outside of the bin storage volume when positioned in the bin. The insert being fully contained within the bin storage volume facilitates stacking of bins in the automated storage and retrieval system, e.g., so that the bins can be stacked in the same manner as bins that do not have the insert.

The present disclosure provides an item handling device for moving a storage item into or out of an insert according to any of the features described above.

The item handling device comprises a suspending device configured to releasably attach to the attachment portion of the insert and, when attached, to suspend the insert from the attachment portion.

The suspending device may comprise a gripper plate for gripping the attachment portion of the insert. The suspending device may comprise a plurality of gripper plates so that a plurality of inserts can be positioned concurrently, which increases throughput. The suspending device may comprise one or more of a recess, a hole, and/or a projection configured to cooperate with the attachment portion of the insert.

The item handling device comprises an actuator configured to, when positioned through the at least one aperture, move a storage item in the first direction into or out of the insert.

The actuator may comprise a conveyor. The conveyor may comprise two or more rollers and a conveyor belt looped around the two or more rollers. The two or more rollers may be mounted on a mounting plate. The conveyor may comprise a drive mechanism to turn the two or more rollers and thereby move the conveyor belt. The actuator may comprise a plurality of conveyors, each corresponding to respective aperture of the insert. A conveyor provides a stable and smooth movement of the item into and out of the insert and therefore is less prone to items being jammed or blocked.

The item handling device comprises a positioning mechanism configured to transition the suspending device and the actuator between a first configuration and a second configuration. The first configuration has the actuator positioned through the at least one aperture. The second configuration has the actuator not positioned through the at least one aperture.

The positioning mechanism may be a crane. The positioning mechanism device may comprise a cantilever arm or a plurality of cantilever arms each associated with a corresponding gripper plate. The positioning mechanism may comprise a lift mechanism configured to raise and lower the suspending device. The positioning mechanism may comprise a column configured to rotate to change positions of gripper plates of the suspending device.

The positioning mechanism may be configured to transition the suspending device to and from a third configuration wherein the insert is positioned in a bin for an automated storage and retrieval system. The positioning mechanism may be configured to transition the insert into and out of the first configuration and second configuration via the second configuration.

The item handling device may comprise a plurality of suspending devices each configured to suspend a respective insert, wherein the positioning mechanism is configured to transition each suspending device between the first configuration and the second configuration. The item handling device may be configured to concurrently process two inserts, three inserts, or four inserts. Using multiple suspending devices and/or processing multiple inserts concurrently increases throughput.

The item handling device may comprise an input item conveyor adjacent the actuator. The item handling device may comprise an output item conveyor adjacent the actuator. In the first configuration, the input item conveyor, the actuator, and the output item conveyor may be arranged in sequence to convey one or more storage item into and/or out of the insert. The input and output conveyors connect the loading and unloading process to a wider item handling system.

The actuator may comprise an item sensor configured to detect the position of a storage item on the actuator. The item sensor may comprise one or more weight sensor. The item sensor may comprise a first weight sensor under a first end of the actuator and a second weight sensor under a second end of the actuator, wherein the item sensor is configured to determine that the storage item is positioned in the centre of the insert when weight measurements from the first and second weight sensors are approximately equal. The item sensor may comprise one or more optical or visual sensor.

The item handling device may comprise a bin bay for receiving the bin. The item handling device may comprise a plurality of bin bays. The positioning mechanism is configured to put the insert into the bin, or remove the insert from the bin, when the bin is in the bin bay or one of the bin bays. The item handling device may comprise a bin conveyor for moving bins into and out of the bin bay or bin bays.

The present disclosure provides a method for moving a storage item into or out of an insert according to of any of features described above. The method comprises suspending the insert from the attachment portion. The method comprises arranging the insert and an actuator in a first configuration wherein the actuator is positioned through the at least one aperture. The method comprises moving a storage item into or out of the insert.

The method may be performed by an item handling device according to any of the features described above.

The suspending may comprise attaching the suspending device to the attachment portion and supporting the weight of the insert, and any items on the insert. The suspending may continue during the arranging and the moving. The suspending may continue during any transition between the first configuration, the second configuration, and/or the third configuration.

The arranging may comprise lowering the suspending device until the at least one actuator is positioned through the at least one aperture. The arranging may comprise raising the at least one actuator until the at least one actuator is positioned through the at least one aperture.

The method may comprise removing the insert from a bin for an automated storage and retrieval system before arranging the insert and the actuator in the first configuration. The method may comprise putting the insert in the bin after moving the storage item into or out of the insert.

The storage item may be an outgoing storage item and the method may comprise moving the outgoing storage item out of the insert and moving an incoming storage item into the insert while the insert and the actuator remain in the first configuration. Concurrent loading and unloading provides a high throughput. The outgoing storage item may move out of the insert through the first opening of the insert and the incoming storage item may move into the insert through the second opening (or vice versa).

The insert may be a first insert and the storage item may be a first storage item. The method may comprise suspending a second insert while moving the first storage item into or out of the first insert. The method may comprise transitioning the first insert and the actuator to a second configuration wherein the actuator is not positioned through the at least one aperture of the first insert. The method may comprise arranging the second insert and the actuator in the first configuration. The method may comprise moving a second storage item into or out of the second insert. By performing processing actions on multiple inserts concurrently, a higher throughput is achieved.

The method may comprise putting the first insert in a bin for an automated storage and retrieval system during one or more of: the arranging the second insert and an actuator in the first configuration; the moving the second storage item into or out of the second insert; and/or transitioning the second insert and the actuator to the second configuration. The first configuration is used to describe any insert having the at least one actuator positioned in its at least one aperture, rather than any specific insert. Likewise, the second configuration for any insert is when no actuator is positioned in the aperture(s) of that insert and the third configuration for any insert is when that insert is positioned in a bin.

The disclosure provides a computer-readable medium comprising instructions which, when executed by a processor of an item handling device according to any of the features described above, cause the device to perform the method according to any of the features described above.

Each possible combination of any of the above-described features forms part of the present disclosure. A plurality of instances of any feature may also be present.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. An insert configured to be removably inserted into a bin for an automated storage and retrieval system, the insert comprising:
a base having a supporting surface for supporting a storage item to be stored in the bin, wherein the base defines at least one aperture in the supporting surface for receiving, through the at least one aperture, an actuator for moving a storage item into or out of the insert in a first direction parallel to the supporting surface; and
at least one attachment portion for releasably attaching to a suspending device, wherein the insert is configured to be suspended from the at least one attachment portion.

2. An insert according to claim 1, comprising:
a first wall extending perpendicularly from a first side of the base; and
a second wall extending perpendicularly from a second side of the base, wherein the second side is opposite the first side across the supporting surface such that a storage volume is defined by the base, the first wall, and the second wall; wherein the storage volume is accessible to a storage item in the first direction through at least one opening between the first wall and the second wall.

3. An insert according to any of claims 1-2, wherein the at least one attachment portion includes:
a first attachment portion located at an end of the first wall away from the first side of the base; and
a second attachment portion located at an end of the second wall away from the second side of the base.

4. An insert according to any of claims 1-3, wherein the base defines a plurality of apertures including the at least one aperture.

5. An insert according to any of claims 1-4, wherein each of the at least one aperture and/or apertures of the plurality of apertures has a length in the first direction and a width in a second direction perpendicular to the first direction, wherein the length is greater than the width.

6. A bin for an automated storage and retrieval system comprising:
a bin base;
a bin wall extending perpendicular to bin base around a perimeter of the bin base; and
an insert according to of any of claims 1-5.

7. An item handling device for moving a storage item into or out of an insert according to any of claims 1-5, the device comprising:
a suspending device configured to releasably attach to the attachment portion of the insert and, when attached, to suspend the insert from the at least one attachment portion;
an actuator configured to, when positioned through the at least one aperture, move a storage item in the first direction into or out of the insert; and
a positioning mechanism configured to transition the suspending device and the actuator between:
a first configuration wherein the actuator is positioned through the at least one aperture; and
a second configuration wherein the actuator is not positioned through the at least one aperture.

8. An item handling device according to claim 7, wherein the positioning mechanism is configured to transition the suspending device to and from:
a third configuration wherein the insert is positioned in a bin for an automated storage and retrieval system.

9. An item handling device according to claim 7 or 8, wherein the actuator comprises at least one conveyor.

10. An item handling device according to any of claims 7-9, comprising a plurality of suspending devices each configured to suspend a respective insert, wherein the positioning mechanism is configured to transition each suspending device between the first configuration and the second configuration.

11. An item handling device according to any of claims 7-10, comprising:
an input item conveyor adjacent the actuator; and/or
an output item conveyor adjacent the actuator,
wherein, in the first configuration, the input item conveyor and the actuator, and/or the output item conveyor and the actuator, are arranged in sequence to convey one or more storage item into and/or out of the insert.

12. A method for moving a storage item into or out of an insert according to any of claims 1-5, the method comprising:
suspending the insert from the at least one attachment portion;
arranging the insert and an actuator in a first configuration wherein the actuator is positioned through the at least one aperture; and
moving a storage item into or out of the insert.

13. A method according to claim 12, comprising:
removing the insert from a bin for an automated storage and retrieval system before arranging the insert and the actuator in the first configuration; and/or
putting the insert in the bin after moving the storage item into or out of the insert.

14. A method according to claim 12 or 13, wherein the storage item is an outgoing storage item, the method comprising:
moving the outgoing storage item out of the insert and moving an incoming storage item into the insert while the insert and the actuator remain in the first configuration.

15. A method according to any of claims 12-14, wherein the insert is a first insert and the storage item is a first storage item, wherein method comprises:
suspending a second insert while moving the first storage item into or out of the first insert;
transitioning the first insert and the actuator to a second configuration wherein the actuator is not positioned through the at least one aperture of the first insert;
arranging the second insert and the actuator in the first configuration; and
moving a second storage item into or out of the second insert.

16. A method according to claim 15, comprising:
putting the first insert in a bin for an automated storage and retrieval system during:
the arranging the second insert and an actuator in the first configuration;
the moving the second storage item into or out of the second insert; and/or
transitioning the second insert and the actuator to the second configuration.

17. A computer-readable medium comprising instructions which, when executed by a processor of an item handling device, cause the device to perform the method of any of claims 12-16.
